# EUROPEAN PATENT APPLICATION

(11) **EP 1 659 793 A1**
(43) Date of publication of application: **24.05.2006**
(21) Application number: 05110270.5
(22) Date of filing: 02.11.2005
(51) Int. Cl.: H04N 7/10, H04N 7/20

(54) **Communication system**

(30) Priority: 19.11.2004 NL 1027547
(71) Applicant: Tratec Telecom B.V., 3903 LP Veenendaal (NL)
(72) Inventor: Ariesen, Dirk Jan, 3930 LP Veenendaal (NL)
(74) Representative: Hooiveld, Arjen Jan Winfried

(57) **Abstract**

A communication system comprising a transmission network with several subscribers provided with transmitting and receiving means, as well as at least one satellite antenna for transmitting high-frequency data signals from a satellite transmitter to the subscribers over the transmission network, which communication system also comprises an additional channel implemented in the transmission network for low-frequency control signals for controlling high-frequency data signals being transmitted over the transmission network, which additional channel extends between the transmitting and receiving means present at the subscriber's end and transmitting and receiving means present near the satellite antenna, which communication system is characterized in that it comprises galvanic isolation means, wherein the low-frequency control signals between the transmitting and receiving means present at the subscriber's end on the one hand and the transmitting and receiving means present near the satellite antenna on the other hand can be galvanically isolated via the galvanic isolation means.

## Description

The invention relates to a communication system comprising a transmission network with several subscribers provided with transmitting and receiving means, as well as at least one satellite antenna for transmitting high-frequency data signals from a satellite transmitter to the subscribers over the transmission network, which communication system also comprises an additional channel implemented in the transmission network for low-frequency control signals for controlling high-frequency data signals being transmitted over the transmission network, which additional channel extends between the transmitting and receiving means present at the subscriber's end and transmitting and receiving means present near the satellite antenna. The satellite antenna will also be referred to below as dish antenna.

Such a communication system, in which the transmission network is a glass fibre network or a cable network, for example, is generally known. Usually several subscribers living in an apartment building, for example, are involved, and the dish antenna is mounted on the roof of the apartment building. Via the dish antenna, the apartment-dwellers receive all kinds of high-frequency data signals from the satellite, for example television programmes that are normally not provided via the cable network by the operator of a cable TV system. The high-frequency data signals distributed by the dish antenna may vary per subscriber. To that end, a low-frequency control signal is transmitted from a subscriber to the dish antenna via the aforesaid additional channel for controlling high-frequency data signals that are to be transmitted to the subscriber in question. The low-frequency control signals thus determine which high-frequency data signals will be transmitted from the dish antenna to a respective subscriber. This makes it possible to use a system whereby a subscriber pays a fixed monthly amount for a TV programme package that he or she has previously selected. The advantage of using a single (central) dish antenna is, of course, that it prevents a proliferation of unsightly, individual dish antennas. A drawback of the known communications system is that local, undesirable peak loads, for example caused by lightning strikes at the location of the dish antenna or a short-circuit at one of the subscribers, can easily propagate over the transmission network and cause significant material damage elsewhere. It stands to reason that such damage, for example to domestic appliances, computers, telecommunication equipment and the like, can have major economic consequences. In addition, the undesirable peak loads may cause personal injury, for which an operator of the transmission can be made liable.

The object of the invention is to obviate this drawback of the prior art, in the sense that a communication system is proposed in which the aforesaid peak loads cannot propagate over the entire transmission network.

In order to accomplish that object, a communication system of the kind referred to in the introduction is characterized in that the communication system comprises galvanic isolation means, wherein the low-frequency control signals between the transmitting and receiving means present at the subscriber's end on the one hand and the transmitting and receiving means present near the satellite antenna on the other hand can be galvanically isolated via the galvanic isolation means. As a result, undesirable loads will be blocked in time at all times, so that undesirable loads having a low-frequency ("peak loads") occurring at the location of the dish antenna cannot reach the subscribers and such loads occurring at the location of a subscriber cannot propagate to other subscribers and/or to the dish antenna. The galvanic isolation means also form a clearly distinguishable, concrete demarcation point between the subscribers and an operator of the transmission network, so that it is also possible to make a clear distinction between their respective responsibilities.

In a preferred embodiment of a communication system according to the invention, the galvanic isolation means comprise at least one opto-electrical converter. More particularly, two opto-electrical converters are used, wherein the low-frequency control signals from the transmission means present at the subscriber's end, being galvanically isolated, can be transmitted to the receiving means present near the satellite antenna via one opto-electrical converter and wherein the low-frequency control signals from the transmission means present near the satellite antenna, being galvanically isolated, can be transmitted to the receiving means present at the subscriber's end via the other opto-electrical converter.

In another preferred embodiment of a communication system according to the invention, the galvanic isolation means comprise at least one transformer.

In another preferred embodiment of a communication system according to the invention, the galvanic isolation means comprise at least one capacitor, wherein high-frequency data signals being transmitted over the transmission network between the transmitting and receiving means present at the subscriber's end on the one hand and the transmitting and receiving means present near the satellite antenna on the other hand can be galvanically isolated via the galvanic isolation means. Preferably, at least two high-voltage capacitors are used.

In another preferred embodiment of a communication system according to the invention, the communication system furthermore comprises a second additional channel implemented in the transmission network for encoding signals forming part of the low-frequency control signals for encoding a polarisation condition of high-frequency data signals being transmitted over the transmission network. By giving the high-frequency data signals from the dish antenna a horizontal polarisation condition or a vertical condition, for example, the "satellite" bandwidth in question can be doubled. A control and encoding signal being transmitted from a subscriber to the dish antenna thus determines which high-frequency data signals from the band-pass range of the transmission network will be transmitted to a respective subscriber. Preferably, the encoding signals from the transmission means present at the subscribers' end also feed the transmitting and receiving means present near the satellite antenna and/or the satellite antenna itself.

In another preferred embodiment of a communication system according to the invention, the communication system furthermore comprises a third additional channel implemented in the transmission network for CATV signals. The third additional channel in particular is situated in the central part of the band-pass range of the transmission network, more in particular a bandwidth ranging between about 7 MHz and about 862 MHz. In this connection the term CATV (Community Antenna Television) signals is understood to include tv signals as well as radio signals as being supplied to a cable network by a cable TV operator or via a privately owned conventional antenna.

In another preferred embodiment of a communication system according to the invention, the additional channel for control signals is present in the lower part of the band-pass range of the transmission network. More a particular, the additional channel for control signals has a bandwidth of about 22 kHz.

In another preferred embodiment of a communication system according to the invention, the high-frequency signals from the satellite transmitter that are transmitted over the transmission network by the satellite antenna travel via a channel is situated in the upper part of the band-pass range of the transmission network. This channel preferably has a bandwidth that ranges between about 950 MHz and about 2400 MHz.

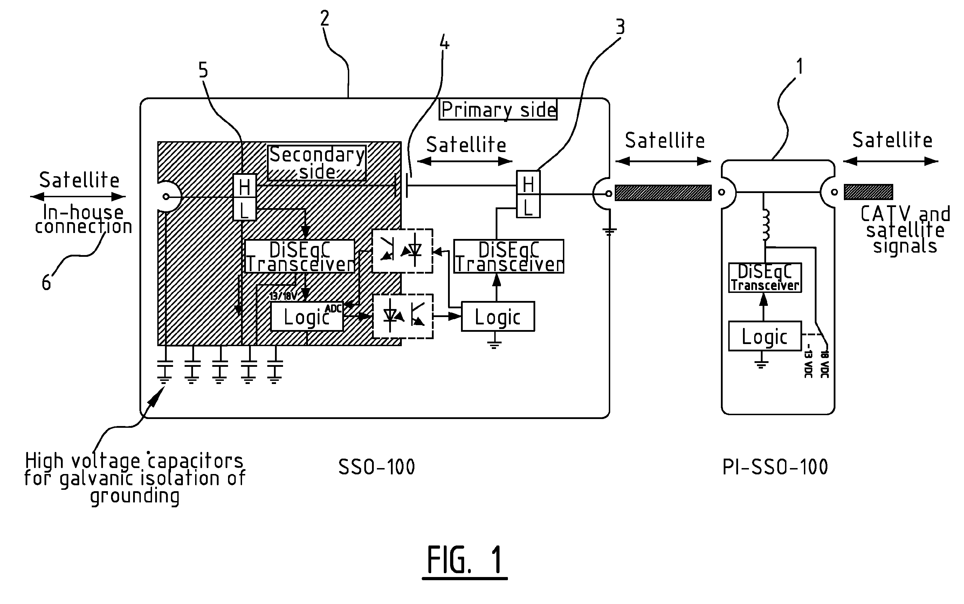

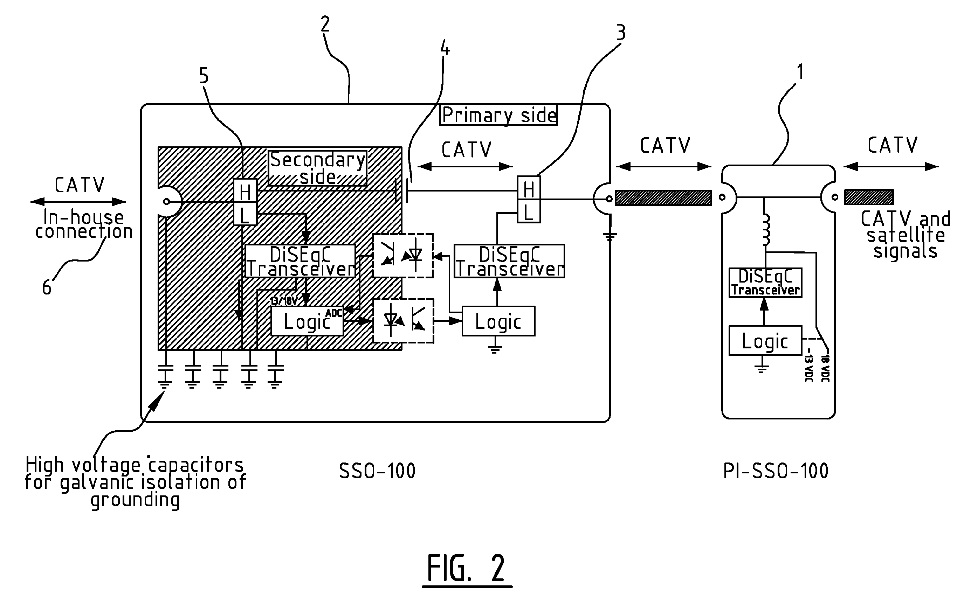

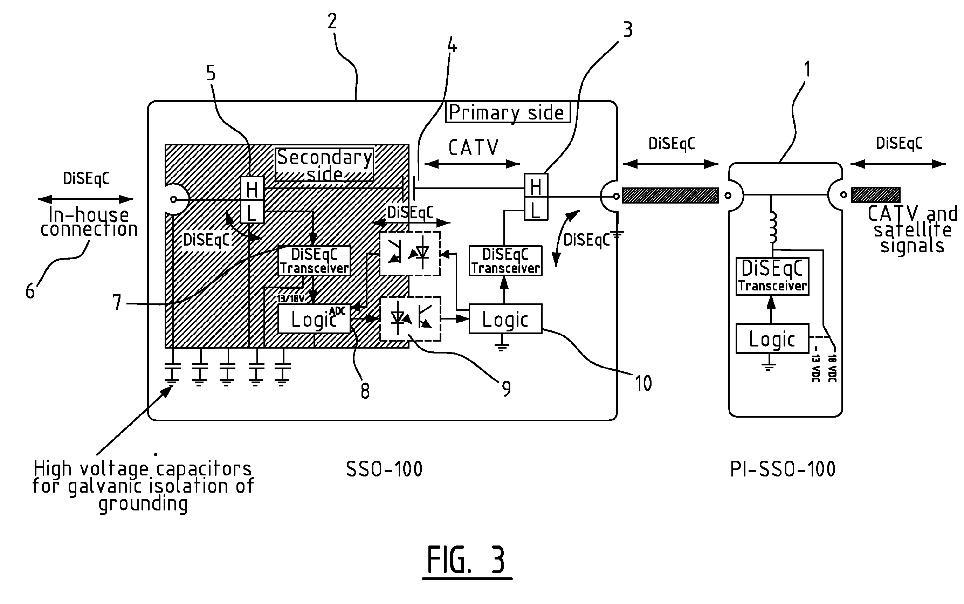

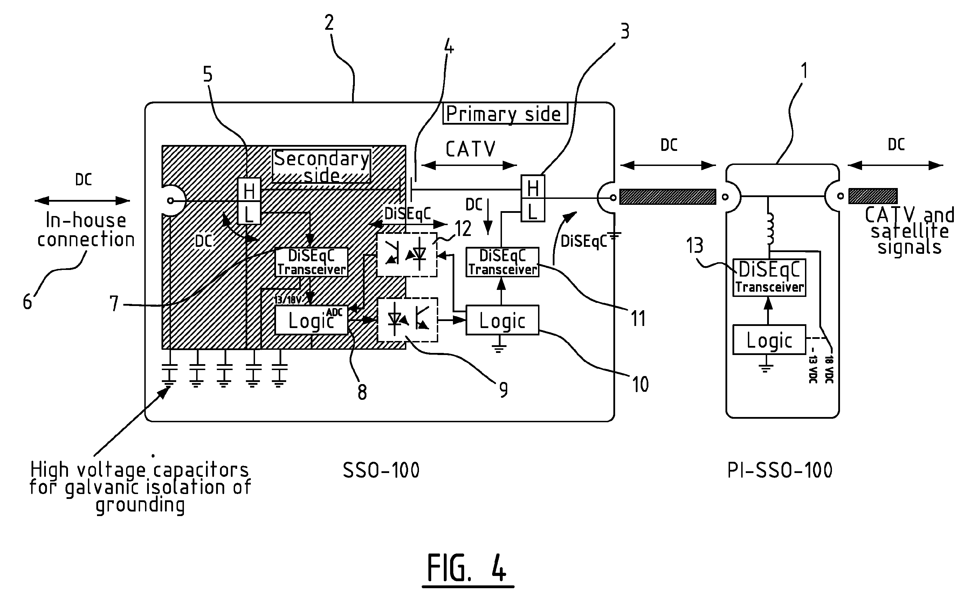

The invention will now be explained in more detail with reference to figures illustrated in a drawing of a preferred variant of a communication system according to the invention, which comprises a cable network, in which drawing
- Figures 1-4 show block diagrams of an electric circuit that indicate the manner in which high-frequency data signals from the satellite (figure 1), high-frequency CATV signals supplied by a cable TV operator (figure 2), the aforesaid low-frequency control (figure 3) and encoding signals (figure 4) between the transmitting and receiving means present at the subscriber's end on the one hand and the transmitting and receiving means present near the dish antenna on the other hand are galvanically isolated in accordance with the invention.

As figures 1-4 show, the present communication system uses two separate components, viz. a component to be connected to the cable network at the subscriber's home, referred to as the "SSO" (Satellite System Outlet) component, and a component to be connected to the cable network near the dish antenna, referred to as the "PI-SSO" (Power Inserter Satellite System Outlet) component.

With reference to figure 1, high-frequency data signals transmitted by a satellite are received by a dish antenna and subsequently routed to the cable network by transmission means present near the dish antenna. Said high-frequency data signals are transmitted to a so-called primary side of the "SSO" component 2 via the "PI-SSO" component 2 that is connected to the cable network. As already said before, the "SSO" component 2 is connected to the cable network at a subscriber's home. A filter 3 present in the "SSO" component 2, also called duplex filter, isolates signals having a high frequency from signals having a low frequency. The duplex filter 3 passes the high-frequency data signals from the satellite on its high-pass side H, therefore. Subsequently, said high-frequency data signals are transported from the primary side of the "SSO" component 2 to a so-called secondary side thereof via at least one high-voltage capacitor 4. Finally, a filter 5 present on said secondary side in the "SSO" component 2 passes the high-frequency data signals on its high-pass side for further transport to subscriber receiving means at the location of the subscriber's house connection 6 to the cable network. The filter 5 is likewise a duplex filter that separates signals having a high frequency from signals having a low frequency. The aforesaid at least one high-voltage capacitor 4 functions as a galvanic isolator, with the high-frequency data signals from the satellite being galvanically isolated between the primary side and the secondary side of the "SSO" component 2. In figures 1-4 said secondary side is shown in grey for easy reference. It is noted that the high-frequency data signals range between about 950 MHz and about 2400 MHz in the band-pass range of the cable network.

The CATV signals being supplied by a cable TV operator or via a privately owned conventional antenna range between about 7 MHz and about 862 MHz in the band-pass range of the cable network. Said signals are likewise high-frequency signals, therefore, which follow the same route in the block diagram as the aforesaid high-frequency data signals from the satellite (figure 2). For the sake of convenience, reference is therefore made to the description of figure 1 in this regard.

As already noted before, the high-frequency data signals from the satellite as distributed by the dish antenna may vary per subscriber. To that end, transmission means present at a subscriber's end transmit a low-frequency control signal to receiving means present near the dish antenna for controlling high-frequency data signals that are to be transmitted to the subscriber. The low-frequency control signals thus determine which high-frequency control signals will be transmitted from the dish antenna to a respective subscriber. With reference to figure 3, such a control signal, also called DiSEqC (Digital Satellite Equipment Control) signal, is supplied from the subscriber's house connection 6 to a so-called "DiSEqC" transceiver 7 (DiSEqC signal transmitter/receiver) on the secondary side of the "SSO" component 2 via a low-pass side of the duplex filter 5, in which transceiver the control signal is converted into a TTL (Transistor Transistor Logic) signal having a frequency of about 22 kHz. The TTL signal is then supplied to a light emitting diode or LED of an opto-electrical converter 9 via a microprocessor 8, after which it is converted into an electrical signal by a light-sensitive transistor of the opto-electrical converter 9. Said electrical signal then reaches a "DiSEqC" transceiver 11 (DiSEqC signal transmitter/receiver) on the primary side of the "SSO" component 2 via logic 10, in which transceiver the signal is converted into the control signal or DiSEqC signal. The control signal is transmitted to the "PI-SSO" component 1 via a low-pass side of the duplex filter 3 and finally reaches the dish antenna. To inform a subscriber that the dish antenna will indeed transmit the high-frequency data signals desired by the subscriber from the satellite to the subscriber on the basis of the control signal in question, a return signal can be transmitted from the transmitter means present at the dish antenna to the receiving means present at the subscriber's end. Such a return signal is transported to the "DiSEqC" transceiver 11 on the primary side of the "SSO" component 2 via a low-pass side of the duplex filter 3, in which transceiver the control signal is converted into a TTL signal having a frequency of 22 kHz. The TTL signal reaches a light-emitting diode or LED of an electro-optical converter 12 by means of the logic 10. The light delivered by the LED is then converted into an electrical signal by a light-sensitive transistor of the opto-electrical converter 12. Said electrical signal subsequently reaches the "DiSEqC" transceiver 7 on the secondary side of the "SSO" component 2 via the microprocessor 8. In said transceiver, the signal is converted into the return signal. On the low-pass side of the duplex filter 5, said return signal finally arrives at the subscriber's house connection 6. The opto-electrical converters 9,12 thus function as galvanic isolators, galvanically isolating the low-frequency control signals or DiSEqC signals between the primary side and the secondary side of the "SSO" component 2. It is noted that the logic 10 and the "DiSEqC" transceiver 11 on the primary side of the "SSO" component 2 are fed by a power supply of the "PI-SSO" component 1, whilst the microprocessor 8 and the "DiSEqC" transceiver 7 on the secondary side of the "SSO" component 2 are fed by a power supply of the receiving means present at the subscriber's end. The logic 8 and the logic 10 are incorporated in the block diagram so as to prevent so-called "oscillation".

The transmission means present at a subscriber's end can also send a DC (Direct Current) signal to the receiving means present near the dish antenna. ON the one hand said DC signal functions to feed the dish antenna, whilst on the other hand it functions as an encoding signal for encoding a polarisation condition (either horizontal or vertical) of high-frequency data signals being transmitted over the transmission network. With reference to figure 4, the DC signal is sent to the "DiSEqC" transceiver 7 via the low-pass side of the duplex filter 5 on the secondary side of the "SSO" component 2, after which the DC signal reaches an Analog/Digital converter 13 in the microprocessor 8. The microprocessor 8 subsequently detects whether the converted signal is a 13 V signal or an 18 V signal, which voltages indicate that the receiving means present at the subscriber's end wish to receive high-frequency data signals having a horizontal polarisation or high-frequency data signals having a vertical polarisation. From the microprocessor 8, the signal is transported to the logic 10 and the "DiSEqC" transceiver 11 by means of the opto-electrical converter 9 in the manner as already described above with reference to the control signals. Finally, the signal is transported from the low-pass side of the duplex filter 3 on the primary side of the "SSO" component 2 to a "DiSEqC" transceiver 13 in the "PI-SSO" component 1. The "DiSEqC" transceiver 13 arranges for the dish antenna to transmit high-frequency data signals having the desired polarisation to the subscriber over the cable network. It will be understood that the opto-electrical converters 9,12 again function as galvanic isolators, galvanically isolating the DC signals between the primary side and the secondary side of the "SSO" component 2. The transmitter means present near the dish antenna can likewise send a return signal to the receiving means present at the subscriber's end in order to inform the subscriber that high-frequency data signals having the desired polarisation condition will indeed be transmitted. Said return signal follows the same route as the return signal that has been discussed above with reference to figure 3, so that for the sake of convenience reference is made to the description of figure 3 in this connection.

It is noted that it is also possible to use triplex filters instead of duplex filters 3,5.

The invention is not limited to the embodiment as shown herein, but it also extends to other variants that fall within the scope of the appended claims.

## Claims

1. A communication system comprising a transmission network with several subscribers provided with transmitting and receiving means, as well as at least one satellite antenna for transmitting high-frequency data signals from a satellite transmitter to the subscribers over the transmission network, which communication system also comprises an additional channel implemented in the transmission network for low-frequency control signals for controlling high-frequency data signals being transmitted over the transmission network, which additional channel extends between the transmitting and receiving means present at the subscriber's end and transmitting and receiving means present near the satellite antenna, **characterized in that** the communication system comprises galvanic isolation means, wherein the low-frequency control signals between the transmitting and receiving means present at the subscriber's end on the one hand and the transmitting and receiving means present near the satellite antenna on the other hand can be galvanically isolated via the galvanic isolation means.

2. A communication system according to claim 1, wherein the galvanic isolation means comprise at least one opto-electrical converter.

3. A communication system according to claim 1 or 2, wherein the galvanic isolation means comprise at least two opto-electrical converters are used, wherein the low-frequency control signals from the transmission means present at the subscriber's end, being galvanically isolated, can be transmitted to the receiving means present near the satellite antenna via one opto-electrical converter and wherein the low-frequency control signals from the transmission means present near the satellite antenna, being galvanically isolated, can be transmitted to the receiving means present at the subscriber's end via the other opto-electrical converter.

4. A communication system according to claim 1, 2 or 3, wherein the galvanic isolation means comprise at least one transformer.

5. A communication system according to any one of the preceding claims 1 - 4, wherein the galvanic isolation means comprise at least one capacitor, wherein high-frequency data signals being transmitted over the transmission network between the transmitting and receiving means present at the subscriber's end on the one hand and the transmitting and receiving means present near the satellite antenna on the other hand can be galvanically isolated via the galvanic isolation means.

6. A communication system according to any one of the preceding claims 1 - 5, wherein the communication system furthermore comprises a second additional channel implemented in the transmission network for encoding signals forming part of the low-frequency control signals for encoding a polarisation condition of high-frequency data signals being transmitted over the transmission network.

7. A communication system according to claim 6, wherein the encoding signals from the transmission means present at the subscribers' end also feed the transmitting and receiving means present near the satellite antenna and/or the satellite antenna itself.

8. A communication system according to any one of the preceding claims 1 - 7, wherein the communication system furthermore comprises a third additional channel implemented in the transmission network for CATV signals.

9. A communication system according to claim 8, wherein said third additional channel in particular has a bandwidth in the central part of the band-pass range of the transmission network.

10. A communication system according to claim 9, wherein said channel in particular has a bandwidth ranging between about 7 MHz and about 862 MHz.

11. A communication system according to any one of the preceding claims 1 - 10, wherein the additional channel for control signals is situated in the lower part of the band-pass range of the transmission network.

12. A communication system according to claim 11, wherein the additional channel for control signals has a bandwidth of about 22 kHz.

13. A communication system according to any one of the preceding claims 1 - 12, wherein the high-frequency signals from the satellite transmitter that are transmitted over the transmission network by the satellite antenna travel via a channel is situated in the upper part of the band-pass range of the transmission network.

14. A communication system according to claim 13, wherein the channel has a bandwidth that ranges between about 950 MHz and about 2400 MHz.
